# EUROPEAN PATENT SPECIFICATION

(11) **EP 3 529 063 B1**
(45) Date of publication and mention of the grant of the patent: **11.10.2023**
(21) Application number: 17793804.0
(22) Date of filing: 20.10.2017
(51) Int. Cl.: B29C 70/56, B29C 70/46, B29C 70/54, B29C 51/08, B29C 51/32

(54) **FORMING AND CUTTING TOOL FOR COMPOSITE MATERIAL AND METHOD FOR FORMING AND CUTTING A COMPOSITE MATERIAL BLANK**
FORM- UND SCHNEIDWERKZEUG FÜR VERBUNDMATERIAL
OUTIL DE FAÇONNAGE ET DE DÉCOUPE POUR MATÉRIAU COMPOSITE

(30) Priority: 24.10.2016 US 201662411770 P
(43) Date of publication of application: 28.08.2019
(73) Proprietor: Dow Global Technologies LLC, Midland, MI 48674 (US)
(72) Inventor: TUDOR, Jay, M., Goodrich MI 48438 (US); WENZEL, Jeffrey, D., Midland, MI 48667 (US); KALEYTA, Scott, R., Midland, MI 48667 (US)
(74) Representative: Boult Wade Tennant LLP
(86) International application number: PCT/US2017/057502
(87) International publication number: WO 2018/080906

(56) References cited:
- EP-A1- 2 327 528
- WO-A1-91/17035
- WO-A1-2014/182429
- FR-A1- 2 820 359
- US-A1- 2008 124 520

## Description

### FIELD

A forming and cutting tool and method of use for molding composite material and trimming non-planar cut edges of molded composite material.

### BACKGROUND

The need for greater fuel efficiency in vehicles has resulted in a need for lighter weight automotive bodies meeting the same safety and performance standards. To provide for lighter weight automotive bodies, lighter weight materials, such as composite materials have been used to form the body panels, reinforcement structures, and other components of the automotive body. One example of a composite material used for automotive bodies to provide for vehicle weight reduce is carbon fiber composite. To be sustainable for use in automotive manufacturing, the carbon fiber composites must be manufactured in a method which is suitable for high volume and economical production. WO 2014/182429 discloses an article according to the preamble of claim 1 and represents a solution for forming and trimming composite materials in order to achieve the weight saving potential of carbon fiber composites and minimize scrap associated with trimming the composite material. Notwithstanding, there are still challenges faced with forming composite structures having three-dimensional, non-planar geometry (i.e., relative to a longitudinal plane and a transverse plane) from composite materials and trimming non-planar edges of the structures after being formed from the composite material.

Composite forming and cutting tools include a number of components which work together to both form composite material into a composite structure and trim the edges of the composite structure. The more components in a die press, the more maintenance is generally required to maintain the tool in working condition; the higher the cost of the tool due to purchasing all of the components and labor associated with assembling the tool; and the more complex the tool may be to use, troubleshoot, and/or repair.

During compression molding of non-planar composite structures, a composite material blank may become wrinkled, torn, or otherwise damaged. This damage can result during application of pressure when clamping the composite material blank between an upper die and a lower and/or when forming (i.e., molding) the composite material blank by deforming the composite material blank between the upper and lower die. The pressure applied during clamping and/or forming of the composite material blank prevents slipping of the composite material between the upper die and lower die, which results in wrinkling, tearing, or other damage to the composite material blank.

There is a need for a single forming and cutting tool useful for both forming a composite material blank into a formed composite material having a non-planar profile and cutting non-planar edges of the formed composite material; a simplified tool design with fewer components; and which is able to aid in preventing material wrinkling.

EP 2327528 discloses a moulding device for preparing surface decorated resin articles.

### SUMMARY

The present invention relates to an article useful as forming and cutting tool according to claim 1.

The upper shearing edge and the lower shearing edge are non-planar and are adapted to form the non-planar cut. The upper shearing edge and the lower shearing edge may have non-planar and reciprocal contours. The upper mold may include a cavity adapted to receive or be received in a core of the lower mold so as to form the composite material into a non-planar shape upon application of a die force. The cavity of the upper mold and the core of the lower mold may have non-planar and reciprocal contours. The upper pressure pad may include a lower pressure surface facing toward the lower pressure pad, the lower pressure pad may include an upper pressure surface facing toward the upper pressure pad, and the upper and lower pressure surfaces may have reciprocal shapes. The lower pressure surface may be adapted to apply a clamping force to an upper pressure surface so as to retain the composite material blank between the upper die and the lower die. The upper pressure pad may be rigidly affixed to the upper die. The lower mold may be rigidly affixed to the lower die. The lower pressure pad may be mounted to the lower die with one or more lower spring members. The upper mold may be mounted to the upper die with one or more upper spring members. The one or more lower spring members, one or more upper spring members, or both may be one or more nitrogen gas springs.

The present invention also relates to a method according to claim 12.

The article and method of the disclosure provide a forming and cutting tool useful for forming a composite material blank into a formed composite structure having at least a portion with non-planar profile or a profile with both non-planar and planar surfaces. The article and method of the disclosure provide for a single forming and cutting tool for forming a composite material blank into a formed composite structure and trimming the edges of the formed composite structure to result in non-planar edges or edges which have both non-planar and planar portions. The article of the disclosure combines a shearing edge into a mold and into a pressure pad of the article which allows for reduced components and tool complexity. The article of the disclosure may incorporate nitrogen springs to optimize pressure on the composite material to help reduce or prevent wrinkling in the material during forming.

### BRIEF DESCRIPTION OF THE DRAWINGS

FIG. 1 illustrates an article in an open position according to the teachings.
FIG. 2 illustrates an upper pressure pad of the article according to the teachings.
FIG. 3 illustrates an upper mold of the article according to the teachings.
FIG. 4 illustrates a lower pressure pad of the article according to the teachings.
FIG. 5 illustrates a lower mold according to the teachings.
FIG. 6 illustrates a cross-section of the article in a final forming position according to the teachings.
FIG. 7 illustrates a cross-section of the article in a final cutting position according to the teachings.
FIG. 8A illustrates a cross-section of the article in an open and loading position upon receiving a composite material blank according to the teachings.
FIG. 8B illustrates a cross-section of the article in a clamping position to retain a composite material blank according to the teachings.
FIG. 8C illustrates a cross-section of the article partway through forming a composite material structure according to the teachings.
FIG. 8D illustrates a cross-section of the article in a final forming position after forming a formed composite structure according to the teachings.
FIG. 8E illustrates a cross-section of the article in a final cutting position after cutting a formed and cut composite structure according to the teachings.
FIG. 8F illustrates a cross-section of the article in an open and unloading position after forming and cutting to create a formed and cut composite structure according to the teachings.
FIG. 9 illustrates an exemplary pillar assembly formed by the article according to the teachings.

### DETAILED DESCRIPTION

The explanations and illustrations presented herein are intended to acquaint others skilled in the art with the present teachings, its principles, and its practical application. The specific embodiments of the present teachings as set forth are not intended as being exhaustive or limiting of the present teachings. The scope of the invention should be determined with reference to the appended claims.

The disclosure relates to an article which is configured to form and cut a composite material blank into a composite structure having non-planar geometry. The article may be referred to as a forming and cutting tool. Composite material may be particularly useful, after being formed and cut into a composite structure, in serving as panel members (i.e., automotive panels); reinforcement structures; for structures useful in transportation such as automobiles, rail engines or cars, buses, trucks; and the like. Non-planar geometry may include one or more surfaces of a structure which are curved; disposed at an angle (i.e., sloping toward or away from) to one or more axes of the structure and/or one or more planes of the structure; or any combination thereof. For example, the composite structure may be a pillar assembly which may include edges (i.e., flanges) about at least a portion of a perimeter of the assembly and surfaces which are non-planar. The edges, surfaces, or both of the composite material may curve or be angled toward or away from a longitudinal axis. The edges, surfaces, or both of the composite material may curve or be angled toward or away from a transverse plane, a longitudinal plane, or both of the composite material.

The article of the invention may be particularly useful in forming and cutting a composite material blank into a desired composite structure. The composite material blank may include one or more sheets or layers of a composite material. The composite material blank may include laminates. The composite material may include a reinforcing material. The reinforcing material may be any material which is capable of improving one or more of the dimensional stability, modulus, tensile strength, bending modulus, electrical properties, the like, or any combination thereof. The reinforcing material may be utilized in any shape which may be capable of improving one or more of the dimensional stability, modulus, tensile strength, bending modulus, electrical properties, the like, or any combination thereof of a formed structure. Exemplary forms of a reinforcing material include particles, beads, porous material, fibrous material, fabric, woven material, non-woven material, the like, or any combination thereof. The composite material blank may include a resin system. The resin system may be useful as a matrix for a reinforcing material. The resin system may include any polymeric material which can function as an epoxy and a curing agent. Exemplary resin systems useful as matrix resins include epoxy resins, polyurethanes, thermoplastic polyurethanes, polyesters, polyamides, polyolefins, styrenic resins, the like, or any combination thereof. The composite material blank may include fibers such as carbon fibers, aramid fibers, glass fibers, other structural fibers, the like, or any combination thereof. The fibers may be nonwoven structures, woven structures, or a combination of both. The fibers may be pre-coated, a woven structure may be pre-impregnated with a matrix resin, or both. For example, the composite material blank may include a carbon fiber pre-impregnated woven fabric. The composite material blank may be tacky to the touch at room temperature or may not be tacky to the touch at room temperature. The composite material blank may have a softening temperature, a curing temperature, or both. At a softening temperature, with the application of pressure, or both, the composite material blank may take on a shape of a mold which applies the pressure to the composite material blank. The composite material may include a latent curing agent so that the composite material may be cured under a reaction condition, such as temperature. The composite material may be comprised of separate components to prevent premature curing, such as a two-part resin system. The composite material may cure when the separate components are mixed with one another to form the composite material. The composite material blank may be compatible with B-staging so that the composite material blank, formed composite structure, and/or formed and cut composite structure may be stored and/or staged prior to curing. The composite material may be a thermoset plastic or thermoplastic. A thermoplastic composite material may allow scrap removed from a formed composite structure to be reutilized in forming another component, another composite material blank, another formed composite structure, and the like, or any combination thereof. Exemplary composite material compositions can be found in PCT Publication No. WO 2014/182429.

The article is comprised of at least two subassembly portions. The at least two subassemblies cooperate together to move one or more components of the article toward one another, mold (i.e., form) a composite material blank, cut a formed composite structure, or any combination thereof. The at least two subassembly portions may have any size or shape to cooperate with one another to form a composite material blank, cut a formed composite structure, or both. The at least two subassembly portions include an upper component and a lower component. According to the invention, the upper component moves towards the lower component. At least one of the subassembly portions may have one or more components reciprocal to one or more components of at least one other subassembly portion. Reciprocal may be defined as one component having a shape with contours substantially similar and inverse to the contours of the shape of another component. Reciprocal components cooperate together to form a non-planar profile and/or cut a non-profile edge in a composite material. In some embodiments, components of the subassembly portions may include two or more die portions, two or more pressure pads, two or more shearing edges, two or more molds, one or more cavities, one or more cores, one or more tension members, one or more mating features, one or more pressure pad stopping features, one or more die portion stopping features, one or more mounts, any other components of the subassembly portion, the like, or any combination thereof.

The article may include and/or be disposed in positions into which the at least two subassembly portions may transition into and/or may be disposed. The positions function so that the article receives a composite material blank, clamps a composite material blank, forms a composite material blank, cuts a formed composite structure, allows for removal of a formed and cut composite structure. The positions include an open position, a clamping position, a forming position, a cutting position, a closed position. One or more of the positions may be held static, may include continuous movement of one or more components, or both.

An open position allows for a composite material blank to be placed between the at least two subassembly portions, a formed composite structure to be removed from between the at least two subassembly portions, or both. In the open position, the at least two subassembly portions are distanced from one another to allow sufficient space for receiving and/or removing a composite material blank and/or structure. A clamping position may include one or more positions of one or more components of the at least two subassembly portions in which the one or more components are able to clamp the composite material blank between the at least two subassembly portions. The clamping position includes at least one of the at least two subassembly portions moving toward another subassembly portion, at least one of the at least two subassembly portions applying a clamping force to a composite material blank to retain the blank within the article, or both. A forming position includes one or more positions of one or more components of the at least two subassembly portions in which one or more components are able to form a composite material blank into a formed composite structure having a non-planar profile. A formed composite structure refers to a structure formed and/or molded from a composite material blank. The forming position may include at least a portion of a subassembly portion being received within another portion of another subassembly portion to form the composite material. A cutting position or sequence of cutting positions results in cutting at least one non-planar edge about at least a portion of a perimeter of a formed composite structure. The cutting position may include one or more positions of one or more components of the at least two subassembly portions which result in one or more components cutting at least one non-planar edge of a formed composite structure. The cutting position includes at least one shearing edge bypassing at least one other shearing edge. A closed position includes one or more positions of one or more components of the at least two subassembly portions in which one or more components have the formed and cut composite structure rested thereon, one or more components are in the last position of a forming and cutting cycle of the article before returning to an open position, or both. A formed and cut composite structure, composite structure, and/or composite material structure refers to a material formed and/or molded from a composite material blank and cut about a least a portion of a perimeter. The closed position may include at least one subassembly portion received within another subassembly portion to the extent a stopping feature prevents further movement of the at least one subassembly portion toward the other subassembly portion. The closed position may be the final position for forming and cutting a composite material before the article returns to the open position.

The article includes two or more die portions. The two or more die portions function to support and/or carry one or more components, move one or more components toward one or more other components, move one or more components away from one or more other components, or any combination thereof. The two or more die portions may have any size and shape suitable to support and/or carry one or more components, move one or more components toward one or more other components, move one or more components away from one or more other components, or any combination thereof. The one or more components include one or more pressure pads, one or more shearing edges, one or more molds, one or more cavities, and may include one or more cores, one or more tension members, one or more mating features, one or more pressure pad stopping features, one or more die portion stopping features, and the like, or any combination thereof. The two or more die portions include an upper die and a lower die. The two or more die portions provide movement of one or more components to provide a die force. The die force functions to clamp a composite material between the at least two die portions, form a composite material blank into a formed composite structure having a non-planar profile, cut non-planar edges at least partially about the formed composite structure, or any combination thereof. The die force includes a clamping force, a forming force, a cutting force, and the like, or any combination thereof. The two or more die portions may function as die blocks. A die block may be understood as a portion of a die to which one or more components of the article are mounted on and/or secured to. One or more die portions are opposing one or more other die portions. For example, a first die portion and second die portion may be opposing each other side-by-side (i.e., laterally) or opposing each other vertically. At least one of the die portions is moveable toward at least one other die portion. One or more die portions may include sub-portions. Sub-portions may be understood as a die portion segmented into a plurality of die portions. For example, an upper die may include two upper dies which cooperate with a single lower die. The one or more die portions may include one portion, two portions, or more. One or more die portions may include one or more mating or alignment features which mate, join, or align two or more die portions together. The one or more die portions may include stop features which prevent further movement of at least one die portion toward at least one other die portion.

The article includes one or more planes. The article includes a transverse plane. The transverse plane may lie in between two or more die portions (e.g., an upper die portion and a second die portion). The transverse plane may be generally parallel to a support surface of one or more die portions. The article may include a longitudinal plane. The longitudinal plane may intersect one or more die portions. The longitudinal plane may be generally perpendicular to the transverse plane. Generally parallel and generally perpendicular may include variances up to 15 degrees from parallel or perpendicular. The variances may account for manufacturing variability, tolerance stack-ups, draft angles, and the like, or any combination thereof.

Each of the two or more die portions may include one or more support surfaces. The one or more support surfaces function to support one or more components of the article. The one or more support surfaces may have any size, shape, and/or profile to support one or more components of the article. At least one of the support surfaces is in an opposing relationship toward at least one other support surface. According to the invention, the upper die includes a support surface opposing the support surface of the lower die. The two or more support surfaces are attached to one or more components of a subassembly portion. The two or more support surfaces are attached to one or more components which are useful in molding (i.e., forming) and/or cutting a composite material. The two or more support surfaces may be attached to one or more components of a subassembly portion which may clamp, form, cut, apply pressure, provide a force, restrict or prevent movement, and/or the like to composite material blank, composite structure, another component of a subassembly portion, or any combination thereof. Components according to the invention include one or more pressure pads, one or more molds, one or more shearing edges. Exemplary components include one or more cavities, one or more cores, one or more tension members, one or more mating features, one or more die portion stopping members, one or more mounts, one or more pressure pad stopping features, and the like, or any combination thereof. One or more of the support surfaces is configured to move toward one or more other support surfaces. A support surface of at least one die portion is configured to move toward a support surface of another die portion to apply a die force, mold or form one or more composite material blanks, cut one or more formed composite structures, or any combination thereof.

The article includes two or more pressure pads. One or more of the pressure pads function to apply pressure onto an opposing pressure pad, retain a perimeter portion of a composite material blank between at least two subassembly portions, mold and/or form one or more portions of a composite material, or any combination thereof. The two or more pressure pads may have any size and/or shape to apply pressure onto an opposing pressure pad, retain a perimeter portion of a composite material blank between at least two subassembly portions, mold and/or form one or more portions of a composite material, or any combination thereof. One or more pressure pads may be attached to one or more components which may clamp, form, cut, apply pressure, provide a force, restrict or prevent movement, and/or the like to composite material blank, composite structure, another component of a subassembly portion, or any combination thereof. One or more of the pressure pads are attached to one or more of the die portions, and may be attached to one or more tension members, one or more pressure pad stopping features, one or more mounts, any other component of the article, or any combination thereof. One or more pressure pads may be rigidly affixed to a die portion. One or more pressure pads may be rigidly affixed to a support surface of a die portion. One or more pressure pads is affixed to a die portion so that the pressure pad moves with the die portion, a support surface, or both. One or more pressure pads may be moveably attached to a die portion or a support surface of a die portion. One or more pressure pads may be affixed to a die portion so that the pressure pad moves relative to a die portion. The one more pressure pads may be attached to the die portion with a connector that facilitates movement of the pressure pads relative to the die portion. A connector may include any connection which functions to facilitate movement of one or more pressure pads relative to a die portion. Exemplary connectors include tension members, threaded fasteners, guide pins, rods, bushings, and the like, or any combination thereof. Threaded fasteners may include one or more bolts, shoulder bolts, screws, studs, nuts, the like, or any combination thereof. For example, one or more pressure pads may be attached to a die portion with one or more tension members to allow movement of the pressure pad relative to the die portion. One or more of the pressure pads may cooperate with one or more other pressure pads to retain a composite material blank, formed composite structure, formed and cut composite structure (i.e., perimeter region, edges, and/or any other region); mold and/or form one or more portions of a composite material; or any combination thereof. One or more of the pressure pads may apply a clamping force to one or more opposing pressure pads to retain a perimeter region of a composite material blank located between the opposing pressure pads. One or more pressure pads apply a die force to one or more opposing pressure pads to form an edge about a composite material blank. One or more of the pressure pads cooperate with one or more components of the article to cut about an edge and/or a perimeter of a formed composite structure. For example, one or more pressure pads may cooperate with another one or more pressure pads, one or more molds, one or more shearing edges, or any combination thereof to cut about an edge and/or a perimeter of a formed composite structure.

One or more of the pressure pads may be comprised of one or more materials suitable for applying a die force on one or more other components of the article, molding and/or forming one or more portions of a composite material structure, cutting one or more portions of a composite material structure, or any combination thereof. The one or more materials of the one or more pressure pads may include any material useful for applying a die force on one or more other components of the article, molding and/or forming one or more portions of a composite material structure, cutting one or more portions of a composite material structure, or any combination thereof. Example components include one or more opposing pressure pads, one or more molds, one or more shearing edges, or any combination thereof. For example, the one or more pressure pads may be comprised of a metal, a polymeric material, and the like, or any combination thereof. An exemplary metal may include steel. Exemplary polymeric materials may include polyamide, nylon, plastic, thermoplastic, styrene, and the like, or any combination thereof. One or more of the pressure pads may be comprised of a single pressure pad or a plurality of pressure pads.

The two or more pressure pads may have any size or shape suitable for retaining a perimeter region of a composite material blank between at least two subassembly portions, forming a composite material structure, cutting a formed composite structure, retaining one or more other components of at least one of the subassembly portions within an interior and/or recess of the pressure pad, or any combination thereof. The two or more pressure pads may have any shape suitable for cooperating with one or more molds, retaining one or more molds within an interior and/or recess of a pressure pad, or both. At least one of the pressure pads may include a recess. The recess may be located within an interior of a pressure pad. The recess may function to have one or more molds disposed within a pressure pad. One or more molds may be located within a recess. For example, an upper mold may be located within a recess of the upper pressure pad, a lower mold may be located within a recess of the lower pressure pad, or both. The two or more pressure pads may have reciprocal shapes to one another, the formed and cut composite structure, or both. Reciprocal may mean a shape substantially similar and/or inverse to one another. The two or more pressure pads may have a shape negative to a surface of a formed composite structure, such as an outer perimeter region of the formed and cut composite structure. Negative may mean a shape and/or contour substantially similar and inverse. A reciprocal and/or negative shape to an opposing pressure pad and/or the outer perimeter region of the formed and cut composite structure may allow two or more pressure pads to cooperate and apply a clamping force to retain the perimeter region between the two or more pressure pads and/or allow a formed composite structure to be cut along one or more non-planar edges to minimize the amount of scrap. By minimizing the amount of scrap, excess material remaining on the formed composite structure may be reduced. Excess material may be defined as material about the perimeter of the composite material blank and/or formed composite structure removed (i.e., scrapped) to expose one or more edges of the formed and cut composite material structure. Prior to removal, the excess material may have a linear thickness which may be the distance from the future exposed one or more edges outward to the perimeter of the formed composite structure. The article may allow for about 0 mm or more, about 1 mm or more, or even about 2 mm or more of excess material to be used to provide for suitable clamping of the composite material blank between the two or more pressure pads. The article may allow for about 5 mm or less, about 4 mm or less, or even about 3 mm or less of excess material to be used to provide for suitable clamping of the composite material blank between the two or more pressure pads. The article may provide for a reduction of about 83% or greater, about 87% or greater, or even about a 90% or greater in the amount of excess material required to provide for suitable clamping of the composite material blank between the pressure pads. The article may provide for a reduction of about 100% or less, about 97% or less, or even about 93% or less in the amount of excess material required to provide for suitable clamping of the composite material blank between the pressure pads. The reciprocal shapes of the pressure pads may enable the one or more pressure pads to apply a clamping force, die force, or both to one or more opposing pressure pads. For example, an upper pressure pad may have a reciprocal shape and contour to a lower pressure pad.

The one or more pressure pads include one or more pressure surfaces. The one or more pressure surfaces function to cooperate with other one or more pressure surfaces, clamp a perimeter region of a composite material blank, retain a composite material blank and/or structure between the at least two subassembly portions, clamp a perimeter region of a formed composite structure, or any combination thereof. The one or more pressure surface may have any size, shape, contour, and/or profile to cooperate with one or more other pressure surfaces, retain a composite material blank and/or structure between the at least two subassembly portions, clamp a perimeter region of a composite material blank, clamp a perimeter region of a formed composite structure, or any combination thereof. The one or more pressure surfaces may be surfaces of the one or more pressure pads opposing a support surface of a die portion, not attached to a die portion, not in direct contact with a die portion, not directly adjacent to a die portion, not directly adjacent to a support surface, or any combination thereof. The one or more pressure surfaces may be opposing and/or facing one or more other pressure surfaces, one or more support surfaces of one or more die portions, one or more other pressure pads, or any combination thereof. The one or more pressure surfaces may include an upper pressure surface, a lower pressure surface, or both. An upper pressure surface may oppose and face toward a lower pressure surface. One or more pressure surfaces may cooperate with one or more other pressure surfaces to clamp a perimeter region of a composite material. One or more pressure surfaces may have a reciprocal contour to one or more other pressure surfaces. For example, an upper pressure surface may have a reciprocal contour to a lower pressure surface. One or more pressure surfaces may be non-planar. A non-planar pressure surface may be curved, angled or both relative to a transverse plane, a longitudinal plane, or both of the article. One or more edges of a pressure pad located about a perimeter of a pressure surface may cooperate with another pressure pad, one or more molds, or any combination thereof to cut about an edge of a formed composite structure.

The article includes shearing edges. The shearing edges function to cut the composite material, wherein the cuts create edges, wherein the edges are non planar. In cutting the composite materials, according to some embodiments, shearing edges cooperate with another component of an opposing sub assembly, for example one or more other shearing edges of another pressure pad, another mold, any other component of the article, or any combination thereof. According to the invention, the shearing edges are non planar. One or more shearing edges of a pressure pad and/or a mold may cooperate with one or more shearing edges of another pressure pad, another mold, any other component of the article, or any combination thereof. The one or more shearing edges may be located in any position that facilitates making the desired cut. The one or more shearing edges may be disposed on any component or portion of a component of a subassembly portion which allows formation of a cut edge of the formed composite structure. A shearing edge part of an upper subassembly portion may be referred to as an upper shearing edge. A shearing edge part of a lower subassembly portion may be referred to as a lower shearing edge. Exemplary components include one or more pressure pads, one or more molds, or both. Exemplary portions of components which the one or more shearing edges may be disposed on or be part of may include: at least partially about a perimeter of one or more pressure pads; at least partially about an inner perimeter of a pressure pad; along or adjacent a pressure surface of a pressure pad, opposing a pressure surface of another pressure pad; located at least partially about a perimeter of one or more molds; at least partially about an outer perimeter of one or more molds; about an edge of a mold adjacent to a pressure pad; about an edge of a mold adjacent to a pressure surface of an of a pressure pad, or any combination thereof. One or more shearing edges may cut a formed composite structure by bypassing one or more other shearing edges. According to the invention, the upper shearing edge of the upper die cuts a composite structure by by-passing the shearing edge of the lower mold. The one or more shearing edges are non-planar. Non-planar shearing edges may have any shape that provides the desired cut. Non-planar shearing edges are curved, angled, or both relative to a transverse plane of the article, a longitudinal plane of the article, or both. One or more shearing edges may have a reciprocal contour to one or more other shearing edges. For example, one or more shearing edges of one or more pressure pads may have a reciprocal contour to one or more shearing edges of one or more molds and/or vice-versa.

The article includes two molds. The molds function to shape a composite material blank into a formed composite structure having three-dimensional and/or non-planar geometry. The molds may have any size and/or shape to shape a composite material blank into a formed composite structure having three-dimensional and/or non-planar geometry. According to the invention, the article includes an upper and a lower mold. According to the invention, the upper mold is mounted to the support surface of the upper die and the lower mold is mounted to the support surface of the lower die. The molds may be attached to one or more die portions with one or more tension members, one or more threaded fasteners, the like, or any combination thereof. For example, a mold may be attached to a die portion with one or more springs, one or more threaded fasteners, the like, or any combination thereof. One or more threaded fasteners may include one or more bolts, screws, studs, nuts, the like, or any combination thereof. The molds have an exterior surface or exterior wall about an outer perimeter of the molds. The exterior surface may have a shape which is reciprocal, similar, or identical to an inner wall located about a recess of one or more pressure pads. The molds may include reciprocal and mating shapes to cooperate with one or more other molds. By cooperating with one or more other molds, one or more molds may form a composite material blank into a formed composite structure having three-dimensional and non-planar geometry.

One or more of the molds include a cavity, a core, or both. The cavity, the core, or both may function to form a composite material blank into a formed composite structure having three-dimensional geometry and non-planar contours. The cavity, the core, or both may have any size and/or shape suitable for forming a composite material blank into a formed composite structure having three-dimensional geometry and non-planar contours. The core, the cavity, or both may be shaped as desired opposing surfaces of the formed composite structure. The core, the cavity, or both may be negatives of the formed composite being formed and/or molded within the one or more molds. The cavity, the core or both may be a hollow portion in one or more molds. The cavity, the core, or both may be a protrusion or outwardly extending surface of one or more molds. The cavity may have a reciprocal shape to the core. The cavity, the core, or both may be shaped to receive an opposing cavity, core, composite material blank therebetween, or any combination thereof. The cavity, the core, or both may cooperate with another cavity and/or core to form a composite material blank into a formed composite structure. A cavity may include a cavity surface. The cavity surface may be non-planar so that the cavity surface is curved, angled, or both relative to a transverse plane of the article. A core may include a core surface. The core surface may have a reciprocal shape to the cavity surface. The core surface may be non-planar so that the core surface is curved, angled, or both relative to a transverse plane of the article. The core surface may be substantially reciprocal with the cavity surface. All or portions of the core surface may be at an offset angle to portions of the cavity surface. The offset angle may provide for a draft angle. The core surface, cavity surface, or both may be negatives of opposing surfaces of the formed composite material.

The article may include one or more tension members. The one or more tension members may function to manage and absorb pressure of one or more components of one or more sub-assemblies; optimize a die force and/or pressure to restrain a composite material blank, formed composite structure, and/or formed and cut composite structure located within the article; provide a controlled return pressure; allow one or more molds, one or more pressure pads, or both to move toward or relative to one or more die portions; or any combination thereof. The one or more tension members may have any configuration, shape, and/or size to manage and absorb pressure of one or more components of one or more sub-assemblies; optimize a die force and/or pressure to restrain a composite material blank, formed composite structure, and/or formed and cut composite structure located within the article; provide a controlled return pressure; allow one or more molds, one or more pressure pads, or both to move toward or relative to one or more die portions; or any combination thereof. The one or more tension members may optimize pressure on a composite material blank to help reduce or prevent wrinkling in the composite material blank during clamping, forming, or both; and/or may provide at least a portion of a die force to form a composite material blank into a formed composite structure, cut a formed composite structure into a formed and cut composite structure, or both. The one or more tension members may be part of or attached to one or more subassemblies; one or more components of one or more subassemblies; or both. For example, one or more tension members may be attached to one or more die portions. One or more tension members may extend from one die portion to an opposing die portion; may extend from a support surface toward an opposing support surface; may be attached to one or more pressure pads, one or more molds, or both; may connect one or more molds and/or one or more pressure pads to one or more die portions; or any combination thereof. One or more tension members may include one or more upper tension members, one or more lower tension members, or both. One or more upper tension members may be part of or connected to one or more upper subassemblies, one or more lower tension members may be part of or connected to one or more lower subassemblies, or both.

The one or more tension members may include any suitable device having a suitable initial force, maximum force upon contact, tensile strength, abrasion and tear resistance, load bearing capabilities, and/or compression properties. The one or more tension members may have a spring stiffness (i.e., spring constant) of about 20 lb/in (3.5 N/mm) or greater, about 40 lb/in (7.0 N/mm) or greater, or even about 80 lb/in (14 N/mm) or greater. The one or more tension members may have a spring stiffness (i.e., spring constant) of about 180 lb/in (31.5 N/mm) or less, about 160 lb/in (28 N/mm) or less, or even about 140 lb/in (24.5 N/mm) or less. The one or more tension members may singularly or in combination apply a force per unit cut length during clamping, forming, and/or cutting of a composite material in the article. The force per unit cut length during clamping and/or forming of a composite material may be about 3.0 N/mm or greater, about 3.1 N/mm or greater, or even about 3.2 N/mm or greater. The force per unit cut length during clamping and/or forming of a composite material may be about 3.7 N/mm or less, about 3.6 N/mm or less, or even about 3.5 N/mm or less. The force per unit cut length during cutting of a composite material may be about 5 times or greater, about 6 times or greater, or even about 7 times or greater than during clamping and/or forming. The force per unit cut length during cutting of a composite material may be about 10 times or less, about 9 times or less, or even about 8 times or less than during clamping and/or forming. One or more tension members may include any material or component with the ability to store energy, release energy, or both. One or more tension members may include one or more springs, one or more elastomeric systems, or both. One or more elastomeric systems may include polymeric materials, such as polyurethane. A suitable exemplary elastomeric system may include Formathane^{®} Urethane sold by Dayton Lamina. One or more springs may include a nitrogen spring, a service spring, a mold return spring, a mega coil spring, a die spring, and the like, or any combination thereof. Suitable exemplary nitrogen springs may include DADCO^{®} Part No. SC.01800.40.TO, charge 1,450 PSI and/or DADCO^{®} Part No. SC.00740.25.TO, charge 370 PSI sold by Dadco, Inc. 1 PSI is equivalent to 6894.8 Pa. One or more of the tension members may be stiffer than one or more other tension members. One or more tension members which are part of a lower sub-assembly may be stiffer than one or more tension members which are part of an upper sub-assembly and/or vice-versa. For example, one or more lower tension members may be stiffer than one more upper tension members or vice-versa. One or more tension members may be stiffer than other tension members to allow one or more components of one or more subassemblies to cooperate with one or more other components of one or more subassemblies. One or more tension members may have a different stiffness to allow one or more shearing edges to bypass one or more other shearing edges. For example, one or more lower tension members may be stiffer so that as the upper die portion moves toward the lower die portion to a cutting position, the upper die portion may be able to compress the one or more upper tension members at a greater compression distance than the upper die portion may be able to compress the one or more lower tension members. By compressing the upper tension members at a greater distance, the upper die portion may be able to move closer toward an upper mold than the lower pressure pad may be able to move toward the lower die portion. The difference in compression of the one or more upper tension members compared to the one or more lower tension members allows an upper shearing edge to bypass a lower shearing edge. Nitrogen springs may be advantageous by providing high forces in compact areas. The one or more tension members may have one or more spring preloads which may result in die press or forming forces between one or more opposing molds.

The article may include one or more pressure pad stopping features. The one or more pressure pad stopping features may function to limit movement of one or more pressure pads. The one or more pressure pad stopping features may have any configuration, shape, and/or size to limit movement of one or more pressure pads. An exemplary pressure pad stopping feature may include one or more stop pins, one or more threaded fasteners, the like, or any combination thereof. One or more threaded fasteners may include one or more bolts, shoulder bolts, screws, studs, nuts, the like, or any combination thereof. One or more shoulder bolts may be useful in limiting travel of the one or more pressure pads toward the one or more support surfaces of a die portion to which the pressure pad is affixed. The one or more pressure pad stopping features may be part of or attached to one or more subassembly portions. The one or more pressure pad stopping features may be attached to any component of a subassembly portion to limit movement of one or more pressure pads. The one or more pressure pad stopping features may be attached to one or more die portions, one or more pressure pads, or both. For example, one or more pressure pad stopping features may be attached to a support surface of a die portion. The one or more pressure pad stopping features may prevent one or more pressure pads from rising or lowering too far when free from a die force from an opposing pressure pad. For example, one or more pressure pad stopping features may prevent a lower pressure pad from rising too far when free from a die force from an upper pressure pad, may prevent an upper pressure pad from lowering too far when free from a die force from a lower pressure pad, or both.

The article may include one or more mating features. The one or more mating features may function to align one or more die portions with one or more other die portions, prevent lock-up of the article, or both. The one or more or more mating features may be any configuration, shape, and/or size to align one or more die portions with one or more other die portions, prevent lock-up of the article, or both. Exemplary mating features may include one or more alignment pins, one or more bushings, one or more die interlocks, the like, or any combination thereof. Exemplary suitable die interlocks may include Part Nos. PLF0001 to PLF0005 and/or PLM0001 to PLM0005 sold by DME of Milacron^{®}. The one or more mating features may be located on any part of one or more subassembly portions to align one or more die portions with one or more other die portions, prevent lock-up of the article, or both. One or more mating features may extend from one die portion toward an opposing die portion One or more mating features may extend from a support surface of one die portion toward an opposing support of another die portion. One or more mating features may be concentrically aligned with one or more other mating features. One or more mating features may be located at one or more corners, one or more edges, about at least a portion of a perimeter, or any combination thereof of a die portion. In an open position, one or more mating features may be concentric with and/or distanced from one or more opposing mating features. In a forming position, cutting position, closed position, or any combination thereof, one or more mating features may be concentric, aligned with, and/or inside of one or more opposing mating features.

The article may include one or more die portion stopping features. The one or more die portion stopping features may function to prevent and/or stop movement of one die portion toward another die portion, prevent over-travel of one or more components of the article, cooperate with one or more other die portion stopping features, cooperate with one or more mating features, or any combination thereof. The one or more die portion stopping features may have any configuration, size, and or shape to prevent and/or stop movement of one die portion toward another die portion, prevent over-travel of one or more components of the article, cooperate with one or more other die portion stopping features, cooperate with one or more mating features, or any combination thereof. The one or die portion stopping features upon contacting one or more opposing die portion stopping features, or any other component of a subassembly portion, may prevent further movement of one or more die portions toward one or more other die portions. The one or more die portion stopping features may include one or more stop blocks, one or more press dampers, the like, or any combination thereof. For example, each individual stop block may include a press damper. The press damper may prevent slamming of the article into a closed position. The one or more die portion stopping features may include one or more upper die portion stopping features, one or more die portion stopping features, or both. The one or more die portion stopping features may be part of or attached to one or more subassembly portions. The one or more die portion stopping features may be attached to one or more die portions. The one or more die portion stopping features may be attached to one or more support surfaces of one or more die portions; may extend from one support surface toward an opposing support surface, an opposing die portion stopping feature, or both; and/or may be located adjacent to one or more mating features. The one or more die portion stopping features may have any shape, such as cubed, cylindrical, spherical, pyramided, prismed, coned, the like, or any combination thereof. The one or more die portion stopping features may come into contact with one or more other die portion stopping features when the article is in a final cutting position, closed position, or both. The one or more die portion stopping features may prevent movement of the one or more die portions toward one or more other die portions after the article reaches the final cutting position. One or more die portion stopping features may be sized to allow for bypassing of a shearing edge relative to another shearing edge so as to allow one or more shearing edges to cut one or more edges of a formed composite structure. One or more die portion stopping features may be sized to allow one or more shearing edges to bypass one or more other shearing edges by 1 mm or greater, 2 mm or greater, or even 3 mm or greater. One or more die portion stopping features may be sized to allow one or more shearing edges to bypass one or more other shearing edges by 15 mm or less, 12 mm or less, or even 10 mm or less. The one or more die portion stopping features may be interchangeable with one or more die portion stopping features of different sizes (i.e., height or thickness) so that differently sized die portion stopping features may be used to adjust a bypass distance of one or more shearing edges relative to one or more other shearing edges. The one or more die portion stopping features may provide a low cost and simple solution for adjusting the bypass distance of the one or more shearing edges relative to one or more other shearing edges.

The article is disposed in one or more positions. The one or more positions provides positions of one or more components of the article relative to other components of the article to allow a composite material blank to be loaded into the article, a formed composite structure to be removed from the article, a composite material blank to be clamped in the article, a composite material blank to be molded or formed into a formed composite structure, a formed composite structure to be cut, or any combination thereof. The one or more positions include any position the article may be disposed in to allow a composite material blank to be loaded into the article, a formed composite structure to be removed from the article, a composite material blank to be clamped in the article, a composite material blank to be molded or formed into a formed composite structure, a composite material to be cut, or any combination thereof. The one or more positions depend on a step being performed during a particular time in forming and cutting a composite material blank. The one or more positions include an open position, a clamping position, a midway forming position, a final forming position, a cutting position, or any combination thereof. The article may operate in a continuous press operation. In a continuous press operation, the article may transition between one or more positions without pausing. In a continuous press operation, the article may transition from an open position to a closed position in one stroke, such as a closure stroke. The rate of the closure stroke may be consistent from the open position to the closed position or may be adjustable to decrease or increase the draw speed of the article. The article may be a discontinuous press operation. In a discontinuous press operation, the article may pause at one or more positions before transitioning to another position, may change speeds while transitioning to one or more positions, or both. The article may rest in an open position.

The article may be disposed in an open position. The open position may be a position of one or more components of the at least two subassembly portions which allow a composite material blank to be placed into the article, a formed and cut composite structure to be removed from the article, or both. The open position may be any position the article may be disposed in to allow a composite material blank to be placed into the article, a formed and cut composite structure to be removed from the article, or both. In the open position, one or more die portions, one or more pressure pads, one or more molds, one or more mating features, and/or one or more die portion stopping features, may be distanced from and opposing one or more other die portions, one or more other pressure pads, one or more other molds, one or more other mating features, and/or one or more other die portion stopping features to allow for a composite material blank to be inserted and/or removed from within two or more subassembly portions. In the open position, one or more components of an upper subassembly portion may be distanced from one or more components of a lower subassembly portion. In the open position, there may be sufficient distance between the one or more die portions, one or more pressure pads, one or more molds, or any combination thereof to locate and/or remove a composite material blank from therebetween. In an open position, one or more components of one a subassembly may be aligned to provide support and/or prevent premature deformation of a composite material blank when placed thereon. In an open position, a pressure surface of a pressure pad and a surface of a mold may be relatively aligned to provide support to a composite material lank, prevent premature deformation of a composite material blank when placed onto a pressure pad and/or mold, or both. For example, in the open position, an upper pressure surface of a lower pressure pad and an upper core surface of a lower mold may be relatively aligned. In the open position, one or more tension members may be in a relatively uncompressed state. In the open position, the one or more pressure pad stopping features may prevent a pressure pad from extending beyond a certain distance from one die portion toward an opposing die portion. In the open position, there may be no pressure, die force, clamping force, or any other force applied to the one or more pressure pads, one or more molds, or both. After a composite material blank is placed into the article, one or more components of the upper subassembly portion may be distanced from the composite material blank. For example, in the open position an upper pressure pad, an upper mold, or both do not contact the composite material blank. After a composite material blank is placed into the article, the article may be transitioned from an open position to a clamping position.

The article may be disposed in a clamping position. The clamping position may allow a composite material blank to be retained in between the article. The clamping position may be any position the article may be disposed in to allow a composite material blank to be retained between in the article. To move from the open position to the clamping position, one or more die portions may move toward one or more other die portions to apply a clamping force to the composite material blank. In the clamping position, one or more mating features (i.e., alignment pins) may be partially received within one or more other mating features (i.e., bushings). In the clamping position, one or more pressure pads, one or more molds, or both may be in direct contact with the composite material blank. In the clamping position, one or more pressure pads, one or more molds, or both may be in at least partial direct contact with opposing surfaces of the composite material blank. In the clamping position, two or more pressure pads may apply a clamping force about a perimeter region of the composite material blank. The clamping force may be sufficient to retain the perimeter region of the composite material blank in place as the article moves from a clamping position to a forming position, a cutting position, a closed position, or any combination thereof. The clamping force may be large enough to prevent wrinkling of the composite material blank, encourage temporary and/or permanent bonding of multiple sheets and/or layers of a composite material together, or both. The clamping force may be small enough to prevent tearing of the composite material blank, allow sliding of the composite material blank to take on the shape of one or more molds, or both. After a composite material blank is clamped in the article, the article may be transitioned from a clamping position to a forming position.

The article may be disposed in a forming position. The forming position functions to form and/or mold a composite material blank into a formed composite structure. The forming position may be any position the article may be disposed to form and/or mold the composite material blank into a formed composite structure. The forming position may be a static position of one or more components of the article, or may be a continuous movement of one or more components of the article. In the forming position, a composite material blank is located between two or more components of two or more subassembly portions and molded into a formed composite structure. According to the invention, the composite material blank is located between the upper die and lower die and be molded (i.e., formed) into a formed composite structure. Movement from the open position, clamping position, or both to the forming position may include travel of the at least one die portion toward at least one other die portion, travel of one or more molds toward one or more other molds, receiving at least a portion of one or more molds within at least a portion of the one or more other molds, receiving a core of a mold in a cavity of a mold, or any combination thereof. The composite material blank may be formed into the formed composite structure when one or more molds is at least partially received within one or more other molds. One or more molds may apply pressure to one or more opposing molds to form the composite material blank into a shape reciprocal with the cavity, the core, or both. Due to the pressure between the opposing molds, layers of the composite material blank are bonded together. In the forming position, one or more tension members may be at least partially compressed. For example, one or more upper tension members may be compressed. In the forming position, the article may be operable to hold the composite material blank between one or more die portions with an appropriate amount of pressure to form the composite material blank into a formed composite structure. The appropriate amount of pressure may allow the composite material blank to conform to and slide on one or more pressure pads, one or more molds, or both to conform to a shape formed between the die portions. The appropriate amount of pressure may allow the composite material blank to slide within the article without resulting in wrinkling, tearing, or damage to the composite material blank. In the forming positon, one or more pressure pads may continue to apply pressure about a perimeter region of the composite material to retain the perimeter region between the pressure pads. After forming the composite material blank into a formed composite structure, the article may be transitioned from the forming position to a cutting position.

The article may be disposed in a cutting position. In the cutting position, one or more edges about at least a portion of a perimeter region of a formed composite structure are be cut into one or more cut edges to result in a formed and cut composite structure. The cutting position may be any position or series of positions the article may be disposed in to cut about at least a portion of a perimeter region of a formed composite structure to provide one or more cut edges and result in a formed and cut composite structure. The cutting position may be a continuous movement among a series of positions of one or more components of the article. Movement from the open position, clamping position, forming position, or any combination thereof to a cutting position may include travel of one or more die portions further toward one or more other die portions, travel of one or more pressure pads toward one or more molds, travel of one or more pressure pads at least partially beyond at least a portion of one or more molds, travel of one or more shearing edges toward one or more other shearing edges, travel of one or more shearing edges past one or more other shearing edges, or any combination thereof. Movement of one or more die portions toward one or more other die portions may result in movement of one or more pressure pads closer toward an opposing die portion. Movement of one or more pressure pads may result in movement of one or more shearing edges closer toward an opposing die portion. In the cutting position, movement of one or more die portions toward one or more other die portions may cause one or more shearing edges to bypass one or more other shearing edges. By one or more shearing edges bypassing one or more other shearing edges, the formed composite structure may be cut at least partially about a perimeter region. One or more of the tension members may be compressed to allow one or more shearing edges to bypass one or more other shearing edges. One or more tension members may be more compressed than one or more other tension members to allow one or more shearing edges to bypass one or more other shearing edges. For example, the one or more upper tension members may be further compressed than one or more lower tension members.

The article may be disposed in a closed position. The closed position may be the position the article is disposed in at the completion of a downward stroke before commencing an opening and/or return stroke. The closed position may be any position the article may be disposed in after forming and cutting a composite material which may function as the completion of a downward stroke, commencement of a return stroke, or both. In the closed position, one or more of the die portions may have moved towards one or more other die portions, one or more molds may have moved and been received by or within one or more other molds, one or more pressure pads may be in contact with or applying pressure to one or more other pressure pads and/or one or more tension members, or any combination thereof. In the closed position, one or more molds may clamp one or more layers of formed composite structure in between the one or more molds. In the closed position, the one or more pressure pads may clamp cut edges about a perimeter region of the formed composite structure between the one or more pressure pads. In the closed position, one or more die portion stopping features may be in contact with one or more other die portion stopping features. In the closed position, the one or more mating features may be fully mated. In the closed position, some or all of the one or more tension members may be relatively fully compressed. In the closed position, some or all of the one or more tension members may be ready to apply at least a portion of a return force. The return force may assist one or more components in returning the article to an open position. In the closed position, a portion of one or more pressure pads may be located past a portion of one or more molds. In the closed position, one or more shearing edges are located past one or more other shearing edges. After reaching the closed position, the article may have an opening and/or return stroke. The opening and/or return stroke may return the article to the open position.

According to the invention, a A method of forming a composite material structure includes the steps of method claim 12. The method of forming a composite material structure may further include: placing a composite material blank within the article; removing a formed and cut composite structure from the article; curing a composite material structure; or any combination thereof. The method of forming the composite material structure may include a short cycle time. A short cycle time may allow the composite material blank to be formed and cut into composite structure within a time suitable for automated production, mass production, commercialization, the like, or any combination thereof. A short cycle time may be about 6 minutes or less, about 5 minutes or less, or even about 3 minutes or less. A short cycle time may be about 0.1 minutes or more, about 0.5 minutes or more, or even about 0.8 minutes or more. The method of forming a composite material structure may include heating composite material blanks (i.e., sheets) up to a softening temperature prior to placement into the article. The softening temperature may be about 90°C or less, about 80° or less, or even about 85° or less. The softening temperature may be about 50°C or greater, about 60°C or greater, or even about 65° or greater. The composite material blank may be heated at the softening temperature for a duration of time to soften and allow for flexing such that the composite material blank may be formed into the formed composite material structure upon the application of force from the article. The composite material blank may be heated at the softening temperature for a duration of time which may not result in curing of the composite material. The duration of time the composite material blank may be exposed to the softening temperature may be from about 0.1 minutes or more, about 2 minutes or more, or even about 3 minutes or more. The duration of time the composite material blank may be exposed to the softening temperature may be from about 6 minutes or less, about 5 minutes or less, or even about 4 minutes or less. The softening temperature may be below a curing temperature of the composite material. A softening temperature may be about 150°C or less, about 130°C or less, or even about 110°C or less below a curing temperature. A softening temperature may be about 40°C or more, about 60°C or more, or even about 80°C or more below a curing temperature. The curing temperature may be about 200°C or less, about 180°C or less, or even about 160°C or less. The curing temperature may be about 130°C or greater, about 140°C or greater, or even about 150°C or greater.

The method of forming a composite material structure may include placing a composite material blank in the article. The composite material blank may be placed in between the two or more die portions. The composite material blank may be placed onto one or more pressure pads, one or more molds, or both. The composite material blank may be located onto one or more pressure pads so that a center of the composite material blank is approximately centered with a core of one or more molds. The composite material blank may be located onto one or more pressure pads so that a perimeter region of all or a portion of the composite material blank extends outward to one or more pressure surfaces of one or more pressure pads. The composite material blank may rest on the one or more molds or may be free of contact with one or more molds when initially placed into the article.

The method of forming a composite material structure includes clamping the composite material blank in the article. Clamping the composite material may include the article moving from the open position to the clamping position, with the composite material blank therebetween. Clamping the composite material blank may include moving one or more die portions toward one or more other die portions. Clamping the composite material blank may include contacting the composite material blank with one or more pressure pads, one or more molds, or both. Clamping the composite material blank may include retaining the composite blank between the at least two assembly portions. Clamping the composite material blank may include contacting and retaining the perimeter region of the composite material blank with one or more pressure surfaces of one or more pressure pads. Clamping the composite material blank may be useful in retaining the composite material blank in place during steps of forming, cutting, or both.

The method of forming a composite material structure includes forming or molding the composite material blank into a formed composite structure. Forming the composite material structure may include the article transitioning from an open position or a clamping position to a forming position. Forming the composite material structure may include moving one or more die portions toward one or more other die portions. Forming the composite material structure may include moving one or more molds towards one or more other molds, receiving one or more molds within one or more other molds, or both. Forming the composite material structure may include receiving a core within a cavity with the composite material blank therebetween. As the core is received within the cavity, the composite material blank may deform and take on the shape of the core and the cavity. After the composite material blank may be fully deformed and reciprocal to the core and the cavity, the composite material blank may be a formed composite structure. During forming, the article may be maintained at room temperature and/or cooled to a lower temperature to draw heat out of the composite material blank. Heating of the composite material blank, cooling of the tool, or both may assist in the formed composite structure retaining a formed shape after removal from the article.

The method of forming a composite material structure includes cutting a formed composite structure. Cutting the formed composite structure to provide for a formed and cut composite structure may include the article transitioning from an open position, a clamping position, a forming position, or any combination thereof to a cutting position, a closed position, or both. Cutting the formed composite structure may include one or move die portions moving toward one or more other die portions. Cutting the formed composite structure may include one or more pressure pads cooperating with one or more molds. Cutting the formed composite structure may include one or more shearing edges bypassing one or more other shearing edges. The one or more shearing edges may be located about a perimeter region of the formed composite structure. The shearing edges bypassing one another may result in edges about the perimeter region of the composite material being cut. The perimeter region may be cut into non-planar edges. During the step of cutting a formed composite structure, the one or more tension members singularly or in combination may apply a force or load of about 100 pounds per linear inch of spring (17.5 N/mm) or greater, about 200 lbs per linear inch of spring (35 N/mm) or greater, or even about 250 lbs per linear inch of spring (43.8 N/mm) or greater. During the step of cutting a formed composite structure, the one or more tension members may apply a force or load of about 500 pounds per linear inch of spring (87.6 N/mm) or less, about 400 pounds per linear inch of spring (70.1 N/mm) or less, or even about 350 pounds per linear inch of spring (61.3 N/mm) or less. After cutting the composite material, the article may transition into a closed position.

The method of forming a composite material structure includes removing a formed and cut composite structure from the article. Removing the cut and formed composite structure may include the article transitioning to an open position from a cutting position, closed position, or both. Removal of the composite material may include one or more die portions moving away from one or more other die portions. Removal of the composite material may include moving one or pressure pads, one or more molds, or both away from contacting the formed and cut composite structure. For example, the one or more pressure pads and one or more molds may be moved away from the composite material and an opposing die portion, so that the formed and cut composite structure remains resting on the one or more opposing pressure pads, one or more molds, or both. Removal of the formed and cut composite structure may be complete manually or robotically. Removal of the formed and cut composite structure may occur immediately after returning the article to the open position or may be delayed. Removal of the formed composite structure may be aided by a draft angle of about 90° or less, about 80° or less, or even about 70° or less. Removal of the formed composite structure may be aided by a draft angle of about 3° or more, about 5° or more, or even about 10° or more. Removal of a formed and cut composite structure from the article may also include removal of scrap from the article. The scrap may include the one or more edges cut from the formed composite structure. The scrap may be recycled and reused in a subsequent formed composite structured formed by an article.

The method of forming a composite material structure may include curing the composite material. Curing may allow the formed and cut composite structure to permanently retain its molded (i.e., formed) shape. Prior to curing, the formed and cut composite structure may be removed from the article or may remain in place within the article. After removal from the article or remaining in the article, the formed and cut composite structure may be subjected to curing. The formed and cut composite structure may be immediately sent to a curing process or may be stored for later curing. Upon removal from the article, curing, or both, the formed and cut composite structure may relax or spring-back. To compensate for relaxation or spring-back of the formed and cut composite structure, the upper mold, lower mold, or both may be configured, structured, and/or arranged to form a shape slightly beyond the required contour of the formed and cut composite structure.

### ILLUSTRATIVE EMBODIMENTS

The following descriptions of the Figures are provided to illustrate the teachings herein.

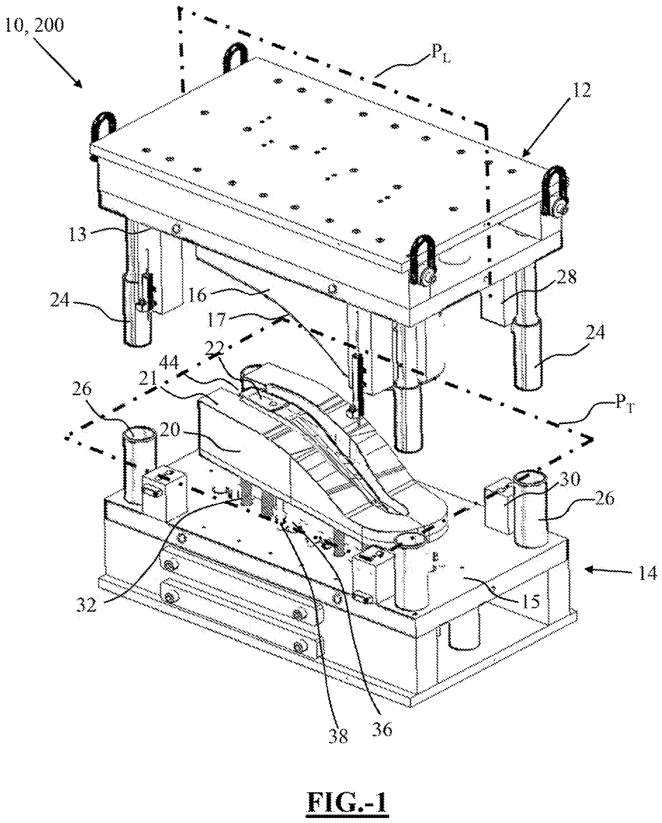

FIG. 1 illustrates an article 10 which is a forming and cutting tool. The forming and cutting tool 10 is in an open position 200. The forming and cutting tool 10 includes an upper die 12 in opposing relationship to a lower die 14. The forming and cutting tool 10 includes a transverse plane P_{T}. The transverse plane P_{T} is generally parallel to a support surface 13, 15 of the upper die 12 and lower die 14. Generally perpendicular to the transverse plane P_{T} is a longitudinal plane P_{L}. The upper die 12 includes an upper die inner surface 13 which faces inwardly toward the opposing, lower die 14. The upper die 12 includes an upper pressure pad 16. The upper pressure pad 16 is mounted to the upper die inner surface 13. The upper die 12 includes an upper mold 18 (not shown). The upper mold 18 is mounted to the upper die inner surface 13. The upper mold 18 is disposed within a recess 42 (not shown) of the upper pressure pad 16. The upper die 12 includes alignment pins 24 located at one or more corners of the upper die 12. The alignment pins 24 extend from the support surface 13 of the upper die 12 toward the lower die 14. The alignment pins 24 align and locate into one or more bushings 26. The upper die 12 includes one or more upper stop blocks 28. The upper stop blocks 28 extend from the support surface 13 of the upper die 12 toward the lower die 14. The upper stop blocks 28 align and contact lower stop blocks 30.

FIG. 1 further illustrates the lower die 14 of the forming and cutting tool 10. The lower die 14 includes a lower die inner surface 15 which faces toward the upper die inner surface 13. The forming and cutting tool 10 includes a lower pressure pad 20. The lower pressure pad 20 is mounted on the support surface 15 of the lower die 14. The lower pressure pad 20 has an upper pressure surface 21 which faces toward the upper pressure pad 16. The upper pressure surface 21 is non-planar. The upper pressure surface 21 has a contour reciprocal to the contour of the lower pressure surface 17 of the upper pressure pad 16. The lower die 14 includes one or more mounts 36 which support the lower pressure pad 20. The lower pressure pad 20 is mounted to the die with one or more lower spring members 32. The lower die 14 includes a lower mold 22. The lower mold 22 is disposed within a recess 44 of the lower pressure pad 20. The lower die 14 includes bushings 26 located at one or more corners of the lower die 14. The bushings 26 extend from the support surface 15 of the lower die 14 toward the upper die 12. The bushings 26 receive the one or more alignment pins 24 when the upper die 12 moves toward the lower die 14. The lower die 14 includes one or more lower stop blocks 30. The lower stop blocks 30 extend from the support surface 15 of the lower die 14 toward the upper die 16. The lower stop blocks 30 align and contact upper stop blocks 28. The lower die 14 includes one or more stop pins 38. The stop pins 38 prevent the lower pressure pad 20 from extending beyond a certain distance from the lower die 14 when the upper die 12 does not apply a force to the lower die 14.

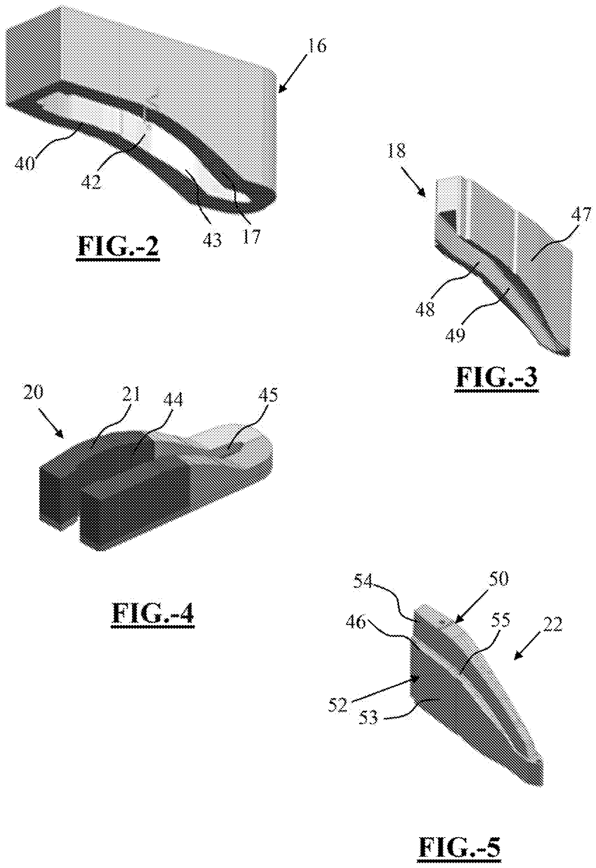

FIG. 2 illustrates an upper pressure pad 16. The upper pressure pad 16 includes a lower pressure surface 17. The lower pressure surface 17 is reciprocal in contour to the upper pressure surface 21 of the lower pressure pad 20 (not shown). The lower pressure surface 17 is non-planar. The upper pressure pad 16 includes a recess 42. The recess 42 is adapted for containing the upper mold 18 (not shown) within. The recess 42 includes an interior wall 43 about the interior of the upper pressure pad 16. The upper pressure pad 16 includes an upper shearing edge 40. The upper shearing edge 40 is located at the edge where the interior wall 43 is adjacent to the lower pressure surface 17.

FIG. 3 illustrates an upper mold 18. When assembled to the article 10, the upper mold 18 is disposed within the recess 42 (not shown) of the upper pressure pad 16. The upper mold 18 includes an exterior wall 47. The exterior wall 47 is continuous about a periphery of the upper mold 18. The exterior wall 47 is contoured substantially similar to an interior wall 43 (not shown) of the upper pressure pad 16 (not shown). The exterior wall 47 provides structural reinforcement to the interior wall 43 of the upper pressure pad 16. The upper mold 18 includes a cavity 48. The cavity 48 includes an interior wall 49 about the interior of the upper mold 18. The cavity 48 has a reciprocal shape to a core 50 of a lower mold 22 so the core 50 may be received within the cavity 48. The interior wall 49 is shaped substantially similar to the exterior of core 50 (not shown) of the lower mold 20 (not shown). The cavity 48 and core 50 work together to form a desired shape or profile in a composite material blank 110 (not shown).

FIG. 4 illustrates a lower pressure pad 20. The lower pressure pad 20 includes an upper pressure surface 21. The upper pressure surface 21 is reciprocal to the contour of the lower pressure surface 17 (not shown) of the upper pressure pad 16 (not shown). The upper pressure surface 21 is non-planar. The lower pressure pad 20 includes a recess 44. The recess 44 is adapted for containing the lower mold 50 (not shown) within. The recess 44 includes an interior wall 45 about the interior of the lower pressure pad 20. The interior wall 45 may have a substantially similar contour or shape to a portion of an exterior of the lower mold 22 (not shown).

FIG. 5 illustrates a lower mold 22. When assembled to article 10, the lower mold 22 is disposed within recess 44 (not shown) of the lower pressure pad 20 (not shown). The lower mold 20 includes a base 52. Extending from the base 52 is a core 50. The base 52 and the core 50 each include an exterior wall 53, 54 about their peripheries. The base 52 is wider than the core 50, such that a flange 55 adjoins exterior wall of the base 52 to the exterior wall 54 of the core 50. The exterior wall 53 of the base 52 is shaped substantially similar to the inner wall 45 (not shown) of the lower pressure pad 20 (not shown). The exterior wall 51 of the core 50 is shaped substantially similar to the inner wall 49 of the cavity 48 (not shown) of the upper mold 18 (not shown). The lower mold 22 includes a lower shearing edge 46. The lower shearing edge 46 is located where the exterior wall 53 of the base 52 transitions to the exterior wall 54 of the core 50. The lower shearing edge 46 is located where the exterior wall 53 of the base 52 is adjacent to the flange 55.

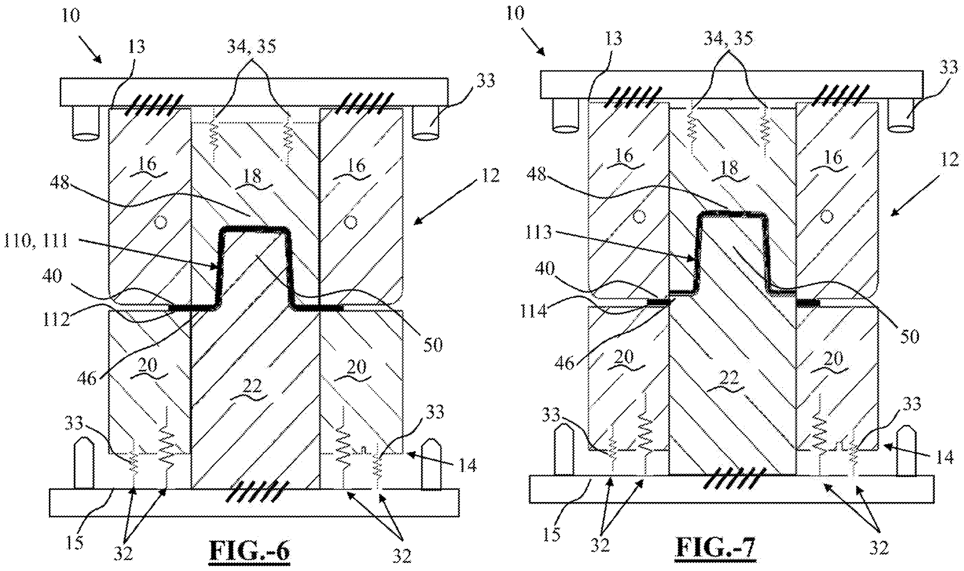

FIG. 6 illustrates a cross-section of the article 10 in a final forming position 206 to mold (i.e., form) a composite material blank 110 into a formed composite structure 111. The lower die 14 includes one or more lower spring members 32. The lower pressure pad 20 is mounted to the lower die with one or more lower spring members 32. The one or more lower spring members 32 are shown compressed, as the upper pressure pad 16 and upper mold 18 apply pressure to the composite material 110, 111, the lower pressure pad 20, and the lower mold 22. At least two of the lower spring members 32 are nitrogen gas springs 33. The upper pressure pad 16 is affixed to the support surface 13 of the upper die 12. The upper mold 18 is located within the upper pressure pad 16 and is mounted to the upper die 12 via one or more upper spring members 34. At least some of the upper spring members 34 may be nitrogen springs 35. A composite material blank 110 is located between the upper die 12 and the lower die 14. Upon movement of the upper die 12 toward the lower die 14 into the final forming position 206, the core 50 of the lower mold 22 is received within the cavity 47 of the upper mold 18. The counter forces of the core 50 and the cavity 48 pressing against one another, the upper pressure pad 16 pressing against the lower pressure pad 20 form the composite material blank 110 into a formed composite structure 111.

FIG. 7 illustrates a cross-section of article 10 in a final cutting position 208 to cut a formed composite structure 111 into a formed and cut composite structure 113. In the final cutting position 208, the upper die 12 moves even closer to the lower die. By moving closer to the lower die, additional force is applied by the upper pressure pad 16 to the lower pressure pad 20. The one or more lower pressure springs 32, 33 compress even further, such that the upper pressure pad 16 and lower pressure pad 20 move closer to the support surface 15 of the lower die. The movement of the upper pressure pad 16 toward the lower die 14 results in the upper shearing edge 40 of the upper pressure pad bypassing the lower shearing edge of the lower mold 22. This bypassing motion of the upper shearing edge 40 relative to the lower shearing edge cuts the edges of the formed composite structure 111 to result in a formed and cut composite structure.

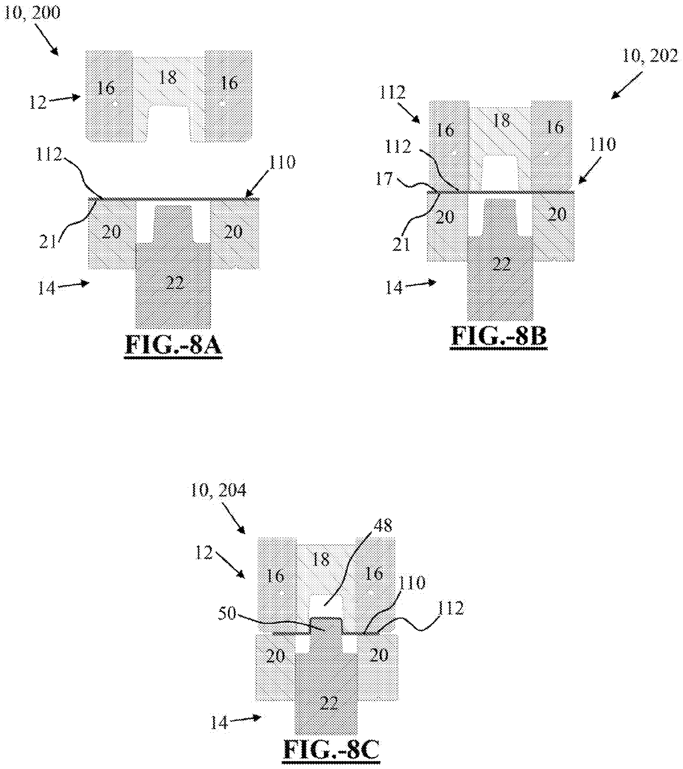

FIGS. 8A-8F illustrate a cross-section of an article 10 during the forming and cutting process of a composite material blank 110. The article 10 may transition between the open position 200 to a closed position 208 in a single closure stroke. The article may transition between the closed position 208 and the open position 200 in a single opening stroke. The article 10 begins a forming and cutting cycle in an open position 200 (as shown in FIG. 8A). The open position 200 may also be an open and loading position. In the open position, the upper die 12 is distanced from the lower die 14. In the open position 200, the upper pressure pad 16 is distanced from the lower pressure pad 20. In the open position 200, the upper mold 18 is distanced from the lower mold 22. In the open position 200, there is sufficient distance between the upper pressure pad 16 and lower pressure pad 20 and between the upper mold 18 and lower mold 22 to place a composite material blank 110 onto the lower pressure pad. The composite material blank 110 may rest on a surface of the lower mold 22 or may be distanced from the lower mold 22. A perimeter region 112 (i.e. edge(s)) of the composite material 110 may rest on the upper pressure surface 21 of the lower pressure pad 20.

From the open position 200, the article 10 transitions to a clamping position 202 (as shown in FIG. 8B). In the clamping position 202 the upper die 12 is closer to the lower die 14 than in the open position 200. In the clamping position 202, the lower pressure pad 20 remains in contact with the composite material blank 110. The upper pressure surface 21 continues to contact and support the perimeter region 112 of the composite material blank 110. The composite material blank 110 may rest on a surface of the lower mold 22 or may be distanced from the lower mold 22. In the clamping position 202, the upper pressure pad 16 is in contact with an opposing surface of the composite material blank 110 as the lower pressure pad. The lower pressure surface 17 of the upper pressure pad 16 is in direct contact with the perimeter region 112 of the composite material blank 110. In the clamping position 202, the upper mold 18 is at least partially in contact with the composite material blank 110. In the clamping position 202, the upper pressure pad 16 applied a clamping force to the lower pressure pad 20 to retain the perimeter region 112 of the composite material blank between the pressure pads 16, 20.

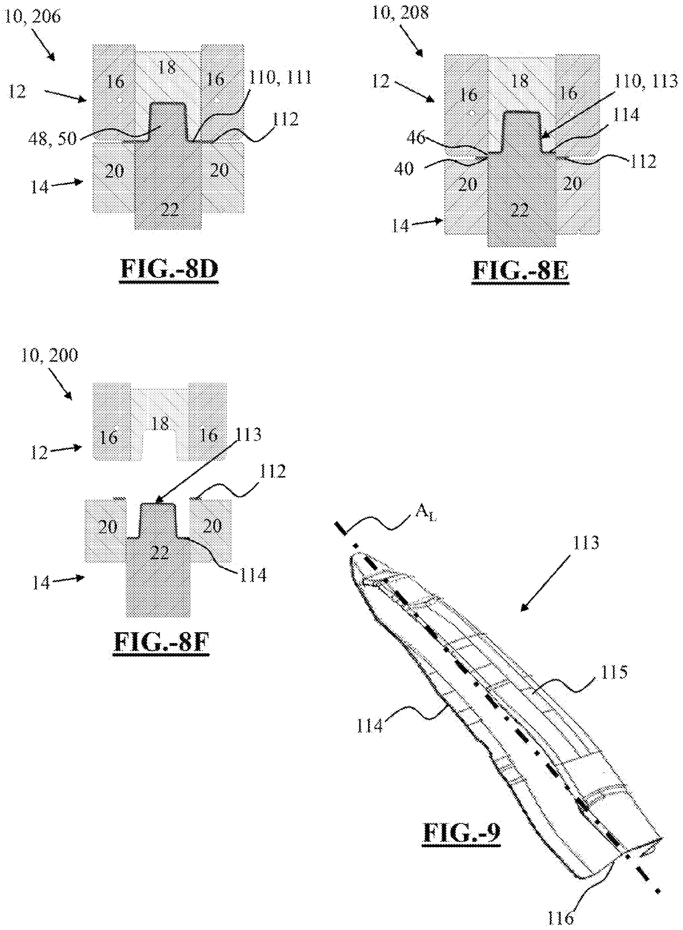

From the clamping position 202, the article transitions to a midway forming position 204 (as shown in FIG. 8C) and then into the forming position 206 (FIG. 8D). In the forming position 206, the upper die 12 is moved closer to the lower die 14. The upper mold 18 is moved toward the lower mold 22, so that a cavity 48 receives a core 22 with the composite material blank 110 therebetween. The upper mold 18 applied pressure to the lower mold 22 and the upper pressure pad 16 applies pressure to the lower pressure 20 to form or mold the composite material blank 110 into a formed composite structure 111 (as shown in FIG. 8D). The formed composite structure 111 has a shape reciprocal to the cavity 48 and the core 50. In the forming position 206, the perimeter region 112 of the formed composite structure 111 remains retained between the upper pressure pad 16 and the lower pressure pad 20.

After the composite material blank 110 is fully formed into the formed composite structure 111, the article transitions from a forming position 206 to the cutting position 208 (as shown in FIG. 8E), which may also be a fully closed position. In the cutting position 208, the upper die 12 may be even closer to the lower die 14 than in the forming position 206. In the cutting position 208, movement of the upper die 12 toward the lower die 14 results in the upper shearing edge 40 bypassing the lower shearing edge 46. When the upper shearing edge 40 bypasses the lower shearing edge 46, the outer perimeter region 112 remains sandwiched between the lower pressure pad 20 and the upper pressure pad 16. The outer perimeter region 112 is separated (i.e., cut) from the formed composite structure 111. When the outer perimeter region 112 is cut from the formed composite structure 111, non-planar cut edges 114 result about at least a portion of the perimeter of the formed composite structure. Having the non-planar cut edges 114, the formed composite structure 111 is transformed into a formed and cut composite structure 113.

After the composite material blank 110 has been transformed into a formed and cut composite structure 113, the article 10 transitions back to the open position 200 (as seen in FIG. 8F). The open position 200 may also be referred to as an open and unloading position. In the open position 200, the formed and cut composite structure 113 remains on the lower mold 22. In the open position 200, the perimeter region 112 (i.e., scrap, scrap perimeter region) remains on the lower pressure pad. In the open position 200, the formed and cut composite structure 113 and the scrap perimeter region 112 are able to be removed from the article 10.

FIG. 9 illustrates an exemplary formed and cut composite structure 113 formed by the article 10. The formed and cut composite structure 113 may be a pillar assembly or other structural reinforcement or panel for an automotive body (not shown). The formed and cut composite structure 113 includes a longitudinal axis A_{L} extending along its lengths. The formed and cut composite structure 113 includes a transverse plane which intersects the longitudinal axis A_{L}. The formed and cut composite structure 113 includes a longitudinal plane which is generally perpendicular with the transverse plane and intersects the longitudinal axis A_{L}. At least a portion of the formed and cut composite structure 113 may include one or more non-planar surfaces 115, 116. One of the non-planar surfaces may be an outward facing surface 115. An inward facing surface 116 may be opposing the outward facing surface 115. The outward facing surface 115 may have a reciprocal shape to an upper mold 18 (not shown). The inward facing surface 116 may have a reciprocal shape to the lower mold 22 (not shown). Extending about at least a portion of a perimeter of the formed and cut composite structure 113 are non-planar cut edges 114. The non-planar surfaces 115, 116 and the non-planar cut edges 114 are non-planar relative to both the transverse plane and the longitudinal plane.

Any numerical values recited in the above application include all values from the lower value to the upper value in increments of one unit provided that there is a separation of at least 2 units between any lower value and any higher value. These are only examples of what is specifically intended and all possible combinations of numerical values between the lowest value, and the highest value enumerated are to be considered to be expressly stated in this application in a similar manner. Unless otherwise stated, all ranges include both endpoints and all numbers between the endpoints. The term "consisting essentially of" to describe a combination shall include the elements, ingredients, components, or steps identified, and such other elements ingredients, components or steps that do not materially affect the basic and novel characteristics of the combination. The use of the terms "comprising" or "including" to describe combinations of elements, ingredients, components, or steps herein also contemplates embodiments that consist essentially of the elements, ingredients, components, or steps.

Plural elements, ingredients, components, or steps can be provided by a single integrated element, ingredient, component, or step. Alternatively, a single integrated element, ingredient, component, or step might be divided into separate plural elements, ingredients, components, or steps. The disclosure of "a" or "one" to describe an element, ingredient, component, or step is not intended to foreclose additional elements, ingredients, components, or steps.

## Claims

1. An article (10) useful as forming and cutting tool comprising:
(a) an upper die (12) having:
(i) an upper pressure pad (16) mounted to a support surface of the upper die (13), wherein the upper pressure pad (16) includes an upper shearing edge (40) located at least partially about an inner perimeter (17) of the upper pressure pad (16);
(ii) an upper mold (18) mounted to the support surface of the upper die (13) and disposed within a recess of the upper pressure pad (42);
(b) a lower die (14) opposing the upper die (12) having:
(i) a lower pressure pad (20) mounted to a support surface of the lower die (15);
(ii) a lower mold (22) mounted to the support surface of the lower die (15) and disposed within a recess of the lower pressure pad (44), wherein the lower mold (22) includes a lower shearing edge (46) located at least partially about an outer perimeter (23) of the lower mold (22); and
wherein the upper die (12) is adapted to come into contact with the lower die (14) such that the upper pressure pad (16) applies pressure to the lower pressure pad (20) and the upper mold (18) applies pressure to the lower mold (22) to form a composite structure (111); **characterized in that** the upper die (12) is adapted to contact the lower die (14) so that the upper shearing edge (40) bypasses the lower shearing edge (46) to form a non-planar cut in a portion of the composite structure (111) , wherein a portion of the upper shearing edge (40) and a portion of the lower shearing edge (46) are non-planar and are curved, angled or both relative to a transverse plane of the article, a longitudinal plane of the article, or both, and are adapted to form the non-planar cut.

2. The article (10) of claim 1 , wherein a portion of the upper shearing edge (40) and a portion of the lower shearing edge (46) have non-planar and reciprocal contours.

3. The article (10) of any of the preceding claims, wherein the upper mold (18) includes a cavity (48) adapted to receive or be received in a core (50) of the lower mold (22) so as to form at least a portion of the composite structure (111) into a non-planar shape upon application of a die force.

4. The article (10) of claim 3, wherein the cavity (48) and the core (50) have non-planar and reciprocal contours.

5. The article (10) of any of the preceding claims, wherein the upper pressure pad (16) includes a lower pressure surface (17) and the lower pressure pad (20) includes an upper pressure surface (21) and the lower pressure surface (17) faces towards and is in an opposing relationship to the upper pressure surface (21).

6. The article (10) of any of the preceding claims, wherein a lower pressure surface (17) is adapted to apply a clamping force to an upper pressure surface (21) so as to retain a composite material blank (110) between the upper die (12) and the lower die (14).

7. The article (10) of claim 3, wherein the lower pressure surface (17) has a surface area about equal to a surface area of the upper pressure surface (21).

8. The article (10) of any of the preceding claims, wherein the upper pressure pad (16) is rigidly affixed to the upper die (12); and/or
wherein the lower mold (22) is rigidly affixed to the lower die (14).

9. The article (10) of any of the preceding claims, wherein the lower pressure pad (20) is mounted to the lower die (14) with one or more lower tension members; and/or
wherein the upper mold (18) is mounted to the upper die (12) with one or more upper tension members.

10. The article (10) of claim 9, wherein the one or more lower tension members are one or more lower springs (32); and/or
wherein the one or more upper tension members are one or more upper springs (34).

11. The article (10) of claims 9 or 10, wherein the one or more lower tension members (32) is one or more nitrogen gas springs (33); and/or
wherein the one or more upper tension members (34) is one or more nitrogen gas springs (35).

12. A method for forming and cutting a composite material blank to form a formed and cut composite structure using the article of any of the preceding claims, comprising:
(i) clamping the composite material blank (110) between the upper die (12) and lower die (14);
(ii) forming the composite material blank (110) into the formed composite structure (111) with at least a portion being non-planar; and
(iii) cutting one or more edges (112) of the formed composite structure (111) to form one or more non-planar cut edges about at least a portion of the formed composite structure (111) and create the formed and cut composite structure (114).

13. The method of claim 12, wherein the method includes placing the composite material blank (110) between the upper die (12) and the lower die (14) when the article (1) is in an open position (200); and
wherein placing the composite material blank (110) includes resting the composite material blank (110) on the lower pressure pad (20).

14. The method of claims 12 or 13, wherein clamping the composite material blank (110) includes movement of the upper die (12) toward the lower die (14) from an open position (200) to a clamping position (202) so that the upper pressure pad (16) moves toward the lower pressure pad (20) to apply a clamping force to the composite material blank (110).

## Patentansprüche

1. Gegenstand (10), der als Umform- und Schneidwerkzeug nützlich ist, umfassend:
(a) eine obere Matrize (12) die aufweist:
(i) ein oberes Druckkissen (16), das an einer Tragoberfläche der oberen Matrize (13) montiert ist, wobei das obere Druckkissen (16) eine obere Scherkante (40) einschließt, die sich mindestens teilweise um einen Innenumfang (17) des oberen Druckkissens (16) herum befindet;
(ii) eine obere Form (18), die an der Tragoberfläche der oberen Matrize (13) montiert und innerhalb einer Aussparung des oberen Druckkissens (42) angeordnet ist;
(b) eine untere Matrize (14), die der oberen Matrize (12) gegenüberliegt, die aufweist:
(i) ein unteres Druckkissen (20), das an einer Tragoberfläche der unteren Matrize (15) montiert ist;
(ii) eine untere Form (22), die an der Tragoberfläche der unteren Matrize (15) montiert und innerhalb einer Aussparung des unteren Druckkissens (44) angeordnet ist, wobei die untere Form (22) eine untere Scherkante (46) einschließt, die sich mindestens teilweise um einen Außenumfang (23) der unteren Form (22) herum erstreckt; und
wobei die obere Matrize (12) angepasst ist, um die untere Matrize (14) derart zu berühren, dass das obere Druckkissen (16) Druck auf das untere Druckkissen (20) ausübt und die obere Form (18) Druck auf die untere Form (22) ausübt, um eine Verbundstruktur (111) auszubilden; **dadurch gekennzeichnet, dass** die obere Matrize (12) angepasst ist, um die untere Matrize (14) zu berühren, sodass die obere Scherkante (40) die untere Scherkante (46) umgeht, um einen nicht ebenen Schnitt in einem Abschnitt der Verbundstruktur (111) auszubilden, wobei ein Abschnitt der oberen Scherkante (40) und ein Abschnitt der unteren Scherkante (46) nicht eben sind und relativ zu einer Querebene des Gegenstands, einer Längsebene des Gegenstands oder beiden gekrümmt, abgewinkelt oder beides sind und angepasst sind, um den nicht ebenen Schnitt auszubilden.

2. Gegenstand (10) nach Anspruch 1, wobei ein Abschnitt der oberen Scherkante (40) und ein Abschnitt der unteren Scherkante (46) nicht ebene und reziproke Konturen aufweisen.

3. Gegenstand (10) nach einem der vorstehenden Ansprüche, wobei die obere Form (18) einen Hohlraum (48) einschließt, der angepasst ist, um einen Kern (50) der unteren Form (22) aufzunehmen oder in diesem aufgenommen zu werden, um mindestens einen Abschnitt der Verbundstruktur (111) bei Anwendung einer Matrizenkraft zu einer nicht ebenen Gestalt auszubilden.

4. Gegenstand (10) nach Anspruch 3, wobei der Hohlraum (48) und der Kern (50) nicht ebene und reziproke Konturen aufweisen.

5. Gegenstand (10) nach einem der vorstehenden Ansprüche, wobei das obere Druckkissen (16) eine untere Druckoberfläche (17) einschließt und das untere Druckkissen (20) eine obere Druckoberfläche (21) einschließt und die untere Druckoberfläche (17) in Richtung der oberen Druckoberfläche (21) gewandt ist und in einer entgegengesetzten Beziehung zu dieser ist.

6. Gegenstand (10) nach einem der vorstehenden Ansprüche, wobei eine untere Druckoberfläche (17) angepasst ist, um eine Klemmkraft auf eine obere Druckoberfläche (21) auszuüben, um einen Verbundmaterialrohling (110) zwischen der oberen Matrize (12) und der unteren Matrize (14) zu halten.

7. Gegenstand (10) nach Anspruch 3, wobei die untere Druckfläche (17) einen Oberflächeninhalt etwa gleich einem Oberflächeninhalt der oberen Druckoberfläche (21) aufweist.

8. Gegenstand (10) nach einem der vorstehenden Ansprüche, wobei das obere Druckkissen (16) an der oberen Matrize (12) starr befestigt ist; und/oder
wobei die untere Form (22) an der unteren Matrize (14) starr befestigt ist.

9. Gegenstand (10) nach einem der vorstehenden Ansprüche, wobei das untere Druckkissen (20) an der unteren Matrize (14) mit einem oder mehreren unteren Spannelementen montiert ist; und/oder
wobei die obere Form (18) mit einem oder mehreren oberen Spannelementen an der oberen Matrize (12) montiert ist.

10. Gegenstand (10) nach Anspruch 9, wobei das eine oder die mehreren unteren Spannelemente eine oder mehrere untere Federn (32) sind; und/oder
wobei das eine oder die mehreren oberen Spannelemente eine oder mehrere obere Federn (34) sind.

11. Gegenstand (10) nach Anspruch 9 oder 10, wobei das eine oder die mehreren unteren Spannelemente (32) eine oder mehrere Stickstoffgasfedern (33) sind; und/oder
wobei das eine oder die mehreren oberen Spannelemente (34) eine oder mehrere Stickstoffgasfedern (35) sind.

12. Verfahren zum Umformen und Schneiden eines Verbundmaterialrohlings, um eine umgeformte und geschnittene Verbundstruktur auszubilden, unter Verwendung des Gegenstands nach einem der vorstehenden Ansprüche, umfassend:
(i) Einklemmen des Verbundmaterialrohlings (110) zwischen der oberen Matrize (12) und der unteren Matrize (14);
(ii) Umformen des Verbundmaterialrohlings (110) zu der umgeformten Verbundstruktur (111), wobei mindestens ein Abschnitt nicht eben ist; und
(iii) Schneiden einer oder mehrerer Kanten (112) der umgeformten Verbundstruktur (111), um eine oder mehrere nicht ebene Schnittkanten um mindestens einen Abschnitt der umgeformten Verbundstruktur (111) herum auszubilden und die umgeformte und geschnittene Verbundstruktur (114) zu erzeugen.

13. Verfahren nach Anspruch 12, wobei das Verfahren ein Platzieren des Verbundmaterialrohlings (110) zwischen der oberen Matrize (12) und der unteren Matrize (14) einschließt, wenn der Gegenstand (1) in einer offenen Position (200) ist; und
wobei das Platzieren des Verbundmaterialrohlings (110) ein Ruhen des Verbundmaterialrohlings (110) auf dem unteren Druckkissen (20) einschließt.

14. Verfahren nach Anspruch 12 oder 13, wobei das Einklemmen des Verbundmaterialrohlings (110) eine Bewegung der obere Matrize (12) in Richtung der unteren Matrize (14) von einer offenen Position (200) zu einer Klemmposition (202) einschließt, sodass sich das obere Druckkissen (16) in Richtung des unteren Druckkissens (20) bewegt, um eine Klemmkraft auf den Verbundmaterialrohling (110) auszuüben.

## Revendications

1. Article (10) utile en tant qu'outil de formage et de coupe comprenant :
(a) une matrice supérieure (12) ayant :
(i) un tampon de pression supérieur (16) monté sur une surface de support de la matrice supérieure (13), le tampon de pression supérieur (16) comportant un bord de cisaillement supérieur (40) localisé au moins partiellement autour d'un périmètre interne (17) du tampon de pression supérieur (16) ;
(ii) un moule supérieur (18) monté sur la surface de support de la matrice supérieure (13) et disposé au sein d'un évidement du tampon de pression supérieur (42) ;
(b) une matrice inférieure (14) opposée à la matrice supérieure (12) ayant :
(i) un tampon de pression inférieur (20) monté sur une surface de support de la matrice inférieure (15) ;
(ii) un moule inférieur (22) monté sur la surface de support de la matrice inférieure (15) et disposé au sein d'un évidement du tampon de pression inférieur (44), le moule inférieur (22) comportant un bord de cisaillement inférieur (46) localisé au moins partiellement autour d'un périmètre externe (23) du moule inférieur (22) ; et
dans lequel la matrice supérieure (12) est conçue pour venir en contact avec la matrice inférieure (14) de telle sorte que le tampon de pression supérieur (16) applique une pression sur le tampon de pression inférieur (20) et le moule supérieur (18) applique une pression sur le moule inférieur (22) pour former une structure composite (111) ; **caractérisé en ce que** la matrice supérieure (12) est conçue pour venir en contact avec la matrice inférieure (14) de sorte que le bord de cisaillement supérieur (40) contourne le bord de cisaillement inférieur (46) pour former une coupe non plane dans une partie de la structure composite (111), une partie du bord de cisaillement supérieur (40) et une partie du bord de cisaillement inférieur (46) étant non planes et étant incurvées, inclinées ou l'un et l'autre par rapport à un plan transversal de l'article, à un plan longitudinal de l'article, ou à l'un et l'autre, et étant conçues pour former la coupe non plane.

2. Article (10) selon la revendication 1, dans lequel une partie du bord de cisaillement supérieur (40) et une partie du bord de cisaillement inférieur (46) ont des contours non plans et réciproques.

3. Article (10) selon l'une quelconque des revendications précédentes, dans lequel le moule supérieur (18) comporte une cavité (48) conçue pour recevoir ou être reçue dans un noyau (50) du moule inférieur (22) de façon à former au moins une partie de la structure composite (111) en une forme non plane lors de l'application d'une force de matrice.

4. Article (10) selon la revendication 3, dans lequel la cavité (48) et le noyau (50) ont des contours non plans et réciproques.

5. Article (10) selon l'une quelconque des revendications précédentes, dans lequel le tampon de pression supérieur (16) comporte une surface de pression inférieure (17) et le tampon de pression inférieur (20) comporte une surface de pression supérieure (21) et la surface de pression inférieure (17) est orientée vers, et est dans une relation opposée avec, la surface de pression supérieure (21).

6. Article (10) selon l'une quelconque des revendications précédentes, dans lequel une surface de pression inférieure (17) est conçue pour appliquer une force de serrage à une surface de pression supérieure (21) de façon à retenir une ébauche de matériau composite (110) entre la matrice supérieure (12) et la matrice inférieure (14).

7. Article (10) selon la revendication 3, dans lequel la surface de pression inférieure (17) a une superficie environ égale à une superficie de la surface de pression supérieure (21).

8. Article (10) selon l'une quelconque des revendications précédentes, dans lequel le tampon de pression supérieur (16) est rigidement fixé à la matrice supérieure (12) ; et/ou
dans lequel le moule inférieur (22) est rigidement fixé à la matrice inférieure (14).

9. Article (10) selon l'une quelconque des revendications précédentes, dans lequel le tampon de pression inférieur (20) est monté sur la matrice inférieure (14) avec un ou plusieurs éléments de tension inférieurs ; et/ou
dans lequel le moule supérieur (18) est monté sur la matrice supérieure (12) avec un ou plusieurs éléments de tension supérieurs.

10. Article (10) selon la revendication 9, dans lequel le ou les éléments de tension inférieurs sont un ou plusieurs ressorts inférieurs (32) ; et/ou
dans lequel le ou les éléments de tension supérieurs sont un ou plusieurs ressorts supérieurs (34).

11. Article (10) selon les revendications 9 ou 10, dans lequel le ou les éléments de tension inférieurs (32) sont un ou plusieurs ressorts à azote gazeux (33) ; et/ou
dans lequel le ou les éléments de tension supérieurs (34) sont un ou plusieurs ressorts à azote gazeux (35).

12. Procédé de formage et de coupe d'une ébauche de matériau composite pour former une structure composite formée et coupée à l'aide de l'article selon l'une quelconque des revendications précédentes, comprenant :
(i) le serrage de l'ébauche de matériau composite (110) entre la matrice supérieure (12) et la matrice inférieure (14) ;
(ii) le formage de l'ébauche de matériau composite (110) en la structure composite formée (111) avec au moins une partie étant non plane ; et
(iii) le fait de couper un ou plusieurs bords (112) de la structure composite formée (111) pour former un ou plusieurs bords de coupe non plans autour d'au moins une partie de la structure composite formée (111) et créer la structure composite formée et coupée (114).

13. Procédé selon la revendication 12, le procédé comportant la mise en place de l'ébauche de matériau composite (110) entre la matrice supérieure (12) et la matrice inférieure (14) lorsque l'article (1) est dans une position ouverte (200) ; et
dans lequel la mise en place de l'ébauche de matériau composite (110) comporte le fait de faire reposer l'ébauche de matériau composite (110) sur le tampon de pression inférieur (20).

14. Procédé selon les revendications 12 ou 13, dans lequel le serrage de l'ébauche de matériau composite (110) comporte un mouvement de la matrice supérieure (12) en direction de la matrice inférieure (14) à partir d'une position ouverte (200) jusqu'à une position de serrage (202) de sorte que le tampon de pression supérieur (16) se déplace en direction du tampon de pression inférieur (20) pour appliquer une force de serrage à l'ébauche de matériau composite (110).
